# EUROPEAN PATENT APPLICATION

(11) **EP 1 134 104 A1**
(43) Date of publication of application: **19.09.2001**
(21) Application number: 00113769.4
(22) Date of filing: 29.06.2000
(51) Int. Cl.: B60J 5/10

(54) **A tailgate assembly for a motor vehicle**

(30) Priority: 14.03.2000 IT TO000043
(71) Applicant: ITALDESIGN-GIUGIARO S.p.A, 10121 Torino (IT)
(72) Inventor: Giugiaro, Fabrizio, 10024 Moncalieri (Torino) (IT)
(74) Representative: Fioravanti, Corrado

(57) **Abstract**

A tailgate assembly for a motor vehicle which includes an upper tailgate portion (12) pivotable about a horizontal axis and a lower tailgate portion (13) articulated to the upper portion (12). The assembly also includes: an electric lock (17) on the lower tailgate portion (13) to lock the tailgate assembly into a closed position; electrically controllable first actuators (23) for pivoting the upper tailgate portion (12); electrically controllable second actuators (24-34) for moving the tailgate portion (13) relative to the upper tailgate portion (12). A switch (20) selectively activates the electric lock (17), the first actuators (23) and the second actuators (24-34).

## Description

The present invention relates to a tailgate assembly for a motor vehicle, of a type described in the preamble to Claim 1.

A tailgate assembly of this type is described, for example, in the European Patent Application published with No. 0 979 746.

The object of the present invention is to provide an improved tailgate assembly, for facilitating the operations of opening and closing the tailgate itself.

This and other objects and advantages, which will be better understood later, are achieved according to the present invention by providing a tailgate assembly having the characteristics defined in the characterising clause of Claim 1.

Additional important characteristics of the invention are claimed in the dependent Claims.

The structural and functional characteristics of a preferred, but non-limitative embodiment of the tailgate assembly of the invention will now be described with reference to the appended drawings, in which:

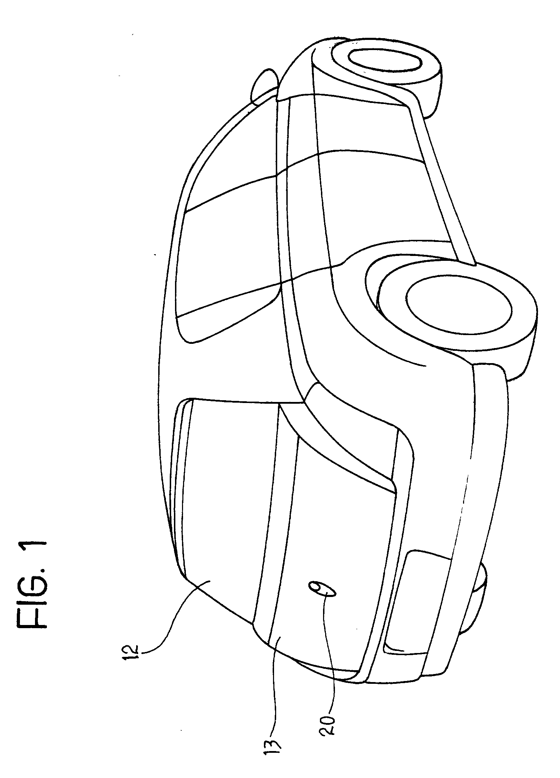

Figure 1 is a rear perspective view of a motor vehicle fitted with a tailgate assembly according to the present invention, in a closed condition;

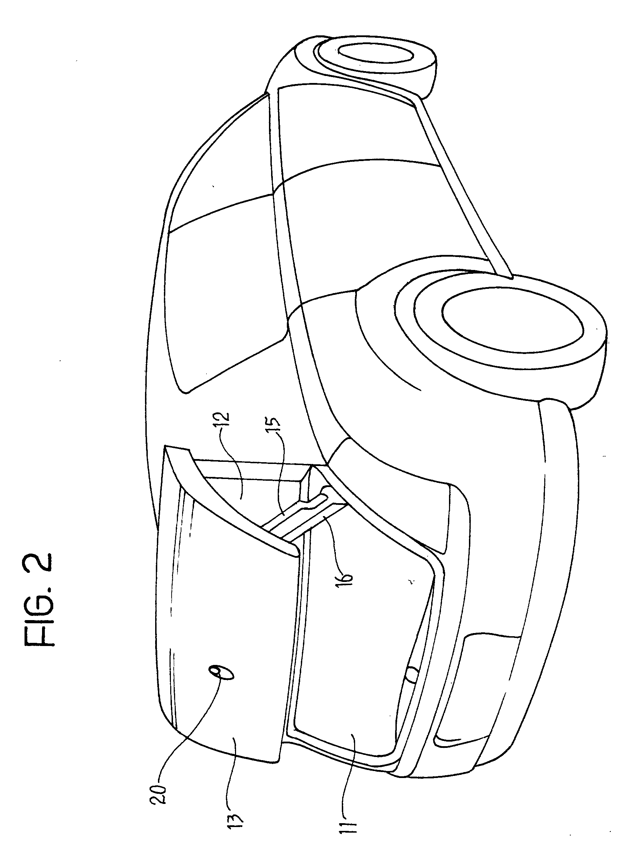

Figure 2 is a perspective view of the motor vehicle of Figure 1, in which the tailgate is in a partially open condition;

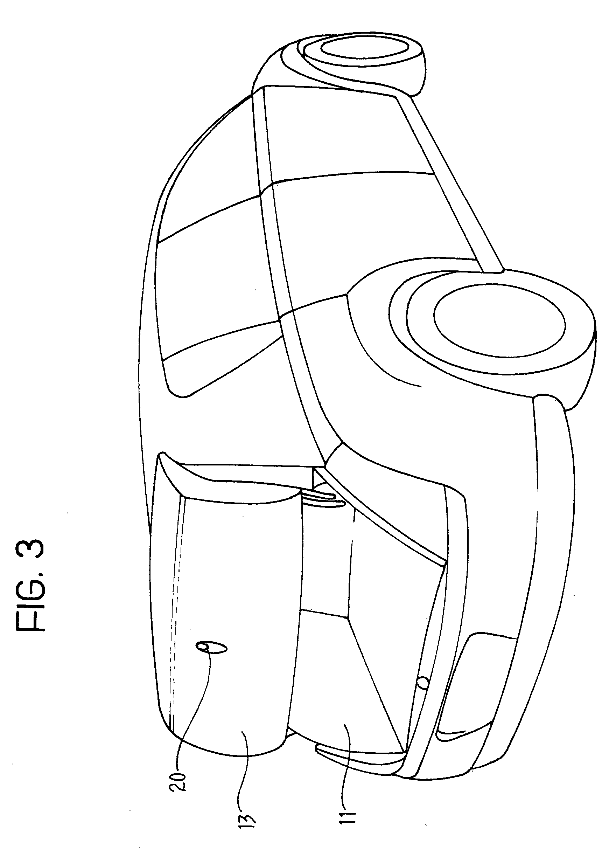

Figure 3 is a perspective view of the motor vehicle of Figure 1, with the tailgate assembly in a fully open condition;
Figure 4 is a schematic view, in vertical longitudinal section, of the tailgate assembly of the invention in a fully closed condition;
Figure 5 is a schematic sectioned view, on an enlarged scale, of a switch for controlling the opening/and or closing movements of the tailgate according to the invention;
Figure 6 is a sectioned view similar to that of Figure 4, with the tailgate in a partially open condition;
Figure 7 is a sectioned view, similar to that of Figure 4, with the tailgate assembly of the present invention in a fully open condition; and
Figure 8 is a perspective view showing the means for moving the lower portion of the tailgate.

With reference to the drawings, a motor vehicle is fitted with a tailgate assembly generally indicated 10, for closing a space 11 situated in the rear of the vehicle.

The tailgate assembly includes an upper tailgate portion 12 mounted at the top on the vehicle body for pivoting about a generally horizontal axis; the upper tailgate portion 12 incorporates a window 18. The tailgate assembly also includes a lower tailgate portion 13 mounted by its top onto the upper portion 12 by means of a pair of articulation devices 14, arranged to either side of the tailgate.

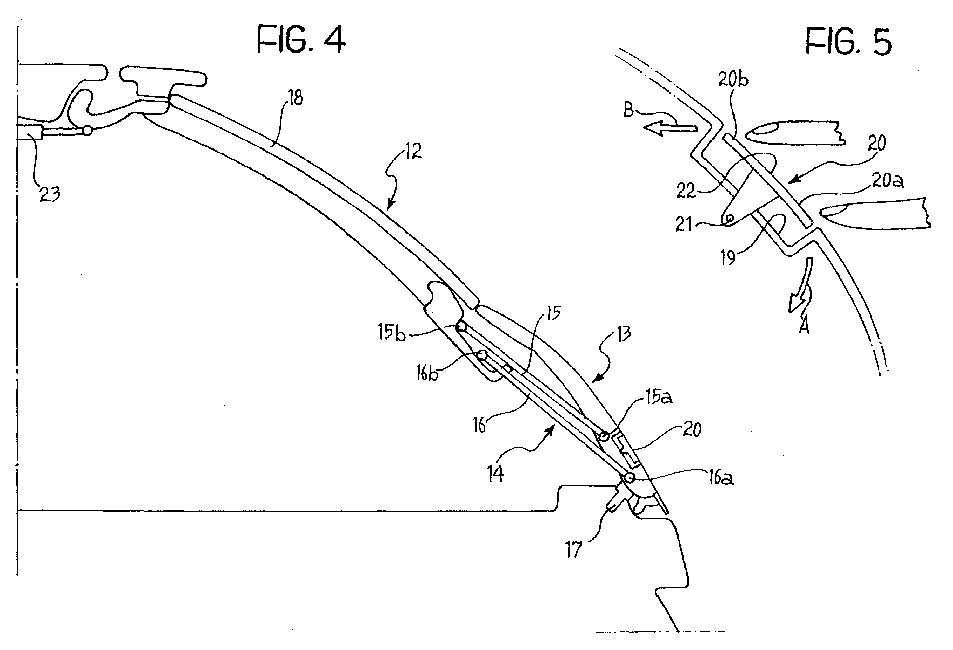

In a preferred embodiment, illustrated in Figures 4, 6 and 7, each articulation device 14 includes a respective pair of arms 15, 16 with their opposite ends pivoted at 15b and 16b to the upper tailgate portion 12, and at 15a and 16a to the lower tailgate portion 13 so as to form a quadrilateral articulated device with the tailgate portions 12 and 13.

An electric lock 17 is fitted to the lower portion of the lower tailgate portion 13 for securing the tailgate assembly, and in particular the lower portion 13 thereof, into a position closing the space 11.

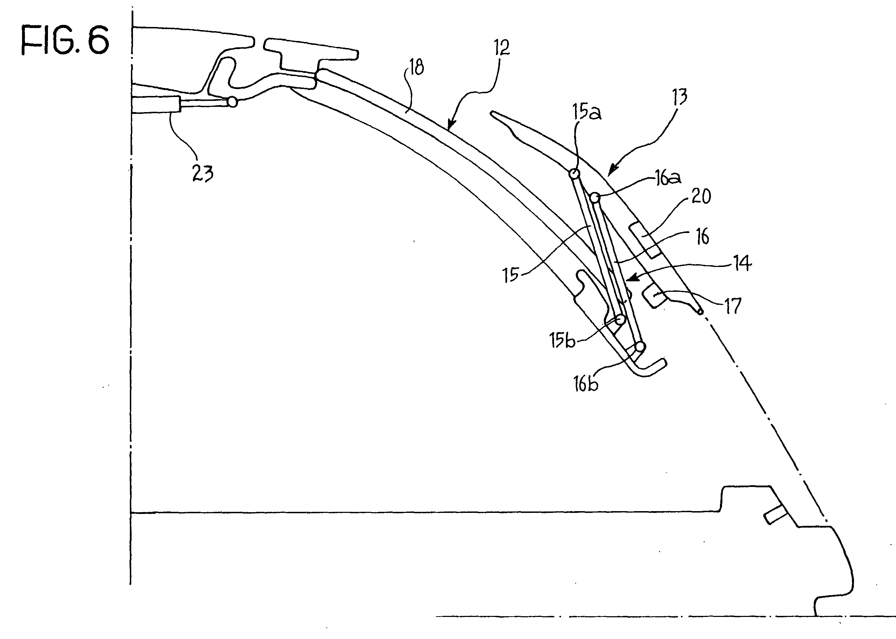

As shown schematically by the enlarged section of Figure 5, the lower tailgate portion 13 has a recessed seat 19 housing a bistable switch 20 for controlling the opening and closing movements of the upper and lower portions 12, 13 of the tailgate. The switch 20 is pivoted at 21 about a horizontal axis and, when in a neutral position its external surface 22 is essentially flush with the surrounding external surface of the lower portion 13 of the tailgate. The external surface 22 of the switch can bear a logo, for example the Trademark of the automobile manufacturer.

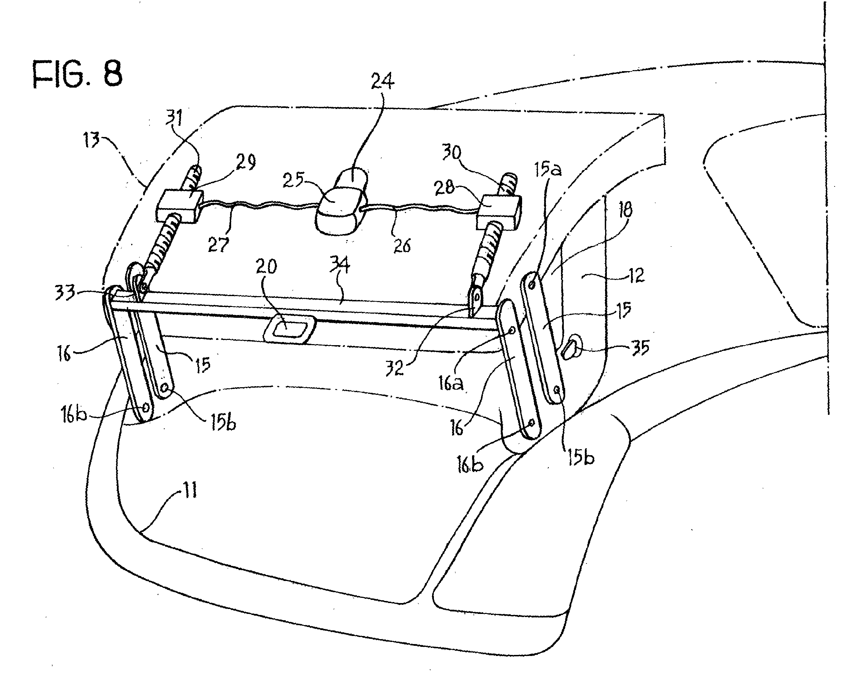

Actuator means, advantageously electrical, are provided for opening and closing the upper 12 and lower 13 portions respectively of the tailgate:
- first actuator means, schematically indicated 23 in Figures 4, 6 and 7, are interposed between the vehicle body and the upper tailgate portion 12;
- second actuator means, shown in Figure 8, are interposed between the tailgate portions 12 and 13.

Both the first and second aforesaid actuator means are controlled in their respective opening and closing movements by a control unit (not shown) which receives control signals from the switch 20.

The second actuator means, which move the lower tailgate portion 13, are incorporated therein. As shown schematically in Figure 8, an electric motor 24 is mounted in a central position on the internal side of the lower tailgate portion 13, with a reduction gear 25 which, by means of a pair of flexible transmission means, such as two Bowden cables 26, 27, for example, controls the rotation of a pair of nut screw elements 28 and 29, arranged near the sides of the tailgate. Two lead screws 30, 31 engage the two nut elements 28, 29, with the lower ends thereof acting on a pair of respective levers 32, 33 with one end fixed to a transverse member 34. The opposite ends of the cross member 34 are secured to the arms 15 or 16, in this example to the arms 16, of both the articulation devices 14.

The tailgate assembly of the invention operates as follows.

Starting from the initial fully closed configuration of Figure 4, the user can press downwards on the lower portion 20a of the switch 20, in the direction indicated by the arrow A in Figure 5. The control imparted by the switch 20 causes the electric lock 17 to unlock and at the same time activates the electric motor 24 which, by means of the Bowden cables 26, 27, the lead screws 30, 31, the levers 32, 33 and the cross member 34, pivots the arms 16 about their pivot point 16b. As a result, the lower tailgate portion is lifted in a combined movement involving rotation and translation in a longitudinal vertical plane, reaching the partially open condition illustrated in Figure 6, in which the lower portion 13 is raised and adjacent the upper portion 12. In this configuration, only the lower portion of the space 11 is open. If access is only required to the lower part of the luggage space, the portion 13 can then be closed again, by pressing the lower part 20a of the switch 20 once more.

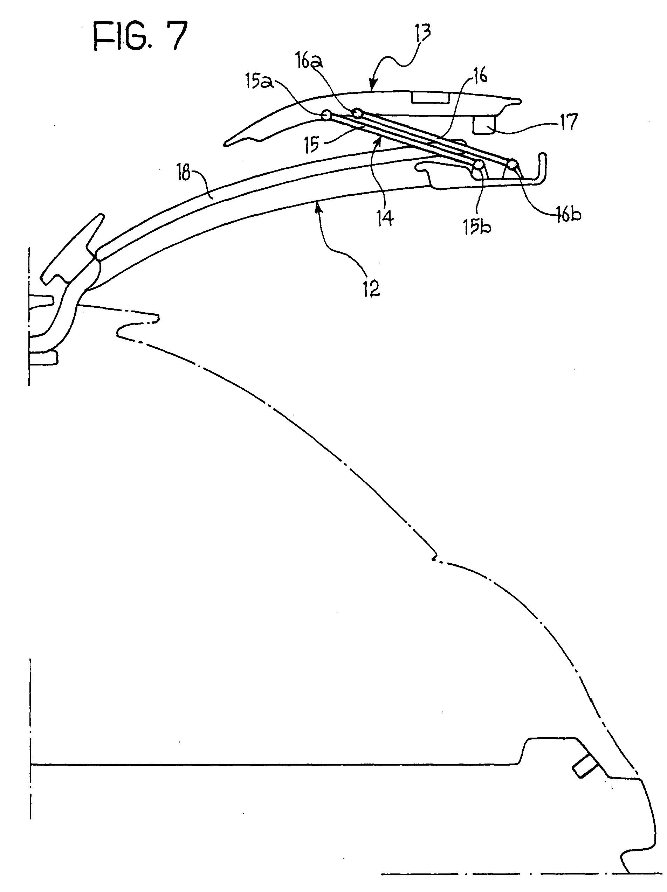

If, on the other hand, in the situation shown in Figure 6, the user chooses to press the upper portion 20b of the switch 20 (as indicated by the arrow B in Figure 5) he thereby controls the activation of the first actuator means 23 which cause the entire tailgate assembly to be raised in its folded condition, thus moving from the position of Figure 6 into the fully open position illustrated in Figure 7, where the entire tailgate assembly is raised above the horizontal.

The user can also choose to open the entire tailgate assembly in one operation; starting from the closed position of Figure 4 and pressing the upper portion 20b of the switch 20, the processor unit (not shown) which receives signals from the switch 20, sequentially activates the first and second actuator means so as fully to open the tailgate without the need for further action. In this case, the lower tailgate portion 13 is first raised and moved into a position immediately over the upper portion 12 (as shown in Figure 6) and then, once this position has been achieved, the entire tailgate assembly is pivoted by the first actuator means 23.

The tailgate is closed by carrying out in reverse the steps described with reference to its opening.

A pair of locks 35, one at either side of the vehicle, are provided in order to lock the upper portion 12 of the tailgate into a closed position (one lock is shown in Figure 8) and controlled each by a respective microswitch which unlocks them automatically when the upper portion 12 is controlled to open.

Thanks to the movement of the lower portion 13, relative to the upper portion 12, the tailgate assembly requires less free space behind the vehicle compared to prior art tailgates formed in one piece.

Naturally, the principle of the invention remaining unchanged, numerous modifications may be made to the shape and configuration of constructional parts. The switch, for example could be an on-off type, while the electronic control unit associated therewith could be set to open and close the tailgate assembly according to a fixed and cyclical sequence: partial opening with only the lower portion raised, full opening with the upper and lower portions pivoting together; pivoting of only the upper portion into the closed portion with the lower portion open (partial opening), and rotational-translational movement of the lower portion alone into a closed position. Finally, in a further embodiment of the invention (not illustrated), the controls for opening and closing could be given by means of a remote control system.

## Claims

1. A tailgate assembly for a motor vehicle, of the type including:
- an upper tailgate portion (12) pivotally mounted at the top to the vehicle body for pivoting about a first horizontal axis;
- a lower tailgate portion (13) articulated superiorly to the upper portion (12) by means of quadrilateral articulation units (14) arranged on either side of the tailgate, whereby the lower portion is able to assume a first extended position, substantially aligned with the upper portion (12) and a second position in which it is substantially above and to the rear of the upper portion (12);
**characterised in that** the assembly also includes:
- an electric lock (17) on the lower tailgate portion (13) for locking the tailgate assembly to the vehicle body in its closed position;
- first electrically controllable actuator means (23), acting between the vehicle body and the upper tailgate portion (12) to cause the tailgate to pivot about the said first horizontal axis;
- second electrically controllable actuator means (24-34) acting between the upper tailgate portion (12) and the lower tailgate portion (13) for moving the latter between the said first and second positions;
- switching means (20) for selectively activating the electric lock (17), the first actuator means (23) and the second actuator means (24-34).

2. A tailgate assembly according to Claim 1, in which the said switching means (20) include a bistable switch.

3. A tailgate assembly according to Claim 2, in which the switch (20) has:
- a first active position for controlling the full opening movement of the tailgate; and
- a second active position, different from the first, for controlling the opening of only the lower tailgate portion (13).

4. A tailgate assembly according to Claim 1, in which the switching means (20) are housed in a recessed seat (19) formed in the lower tailgate portion (13).

5. A tailgate assembly according to Claim 4, in which the switching means include a switch (20) having a neutral position in which the external surface (22) of the switch is essentially flush with the surrounding region of the external surface of the lower tailgate portion (13).

6. A tailgate assembly according to Claim 1, in which the second actuator means (24-34) are incorporated into the lower tailgate portion (13).

7. A tailgate assembly according to Claim 6, in which the second actuator means include:
- a geared electric motor (24, 25);
- a transverse member (34) having opposite ends fixed to elements (16) of the articulation devices (14); and
- drive transmission means (26-33) interposed between the geared motor (24, 25) and the said transmission means (26-33).

8. A tailgate assembly according to Claim 1, further including a remote control system for controlling the opening and closing of the lock (17) and the first (23) and second (24-34) actuator means.
